# NEUE EUROPÄISCHE PATENTSCHRIFT

(11) **EP 3 019 571 B2**
(45) Veröffentlichungstag und Bekanntmachung des Hinweises auf die Entscheidung über den Einspruch: **17.11.2021**
(45) Hinweis auf die Patenterteilung: 06.03.2019
(21) Anmeldenummer: 14738812.8
(22) Anmeldetag: 09.07.2014
(51) Int. Cl.: C09J 7/21, C09J 7/35

(54) **VERFAHREN ZUM UMMANTELN VON LANGGESTRECKTEM GUT WIE INSBESONDERE LEITUNGEN ODER KABELSÄTZEN**
METHOD FOR JACKETING ELONGATE MATERIAL SUCH AS IN PARTICULAR LEADS OR CABLE LOOMS
PROCÉDÉ PERMETTANT D'ENVELOPPER UN PRODUIT ÉTENDU EN LONGUEUR, PAR EXEMPLE EN PARTICULIER DES FILS OU DES ENSEMBLES DE CÂBLES

(30) Priorität: 12.07.2013 DE 102013213725
(43) Veröffentlichungstag der Anmeldung: 18.05.2016
(73) Patentinhaber: tesa SE, 22848 Norderstedt (DE)
(72) Erfinder: SCHMIDLIN, Andreas, 21750 Guderhandviertel (DE); SIEBERT, Michael, 22869 Schenefeld (DE); ZIELINSKI, Steve, Brighton, MI 48114 (US)
(74) Vertreter: tesa SE
(86) Internationale Anmeldenummer: PCT/EP2014/064723
(87) Internationale Veröffentlichungsnummer: WO 2015/004190

(56) Entgegenhaltungen:
- EP-A1- 2 497 805
- EP-A1- 2 520 629
- WO-A1-2010/086244
- JP-A- 2004 056 861

## Beschreibung

Die Erfindung bezieht sich auf ein Verfahren zum Ummanteln von langgestrecktem Gut wie insbesondere Leitungen oder Kabelsätzen.
Seit langem finden in der Industrie Klebebänder zur Herstellung von Kabelbäumen Verwendung. Dabei dienen die Klebebänder zum Bündeln einer Vielzahl von elektrischen Leitungen vor dem Einbau oder in bereits montiertem Zustand, um den Raumbedarf des Leitungsbündels durch Bandagieren zu reduzieren sowie zusätzlich Schutzfunktionen zu erzielen.
Verbreitet sind Kabelwickelbänder mit Folien- und Textilträger, die in der Regel einseitig mit unterschiedlichen Haftklebemassen beschichtet sind.
Derzeitige mit Klebeband umwickelte Kabelsätze sind zunächst prinzipiell flexibel. Um die einzelnen Stränge des Kabelsatzes in einer bestimmten Form zu halten, so dass sie zum Beispiel im Motorraum um den Motor herumgeführt werden können, ohne den Motor zu berühren, werden üblicherweise nachträglich angebrachte Spritzgussteile verwendet. Diese Spritzgussteile haben grundsätzlich den Nachteil, dass ein zusätzlicher Material- und auch Montageaufwand anfällt.
Bei Veränderungen der Kabelsatzführung muss für derartige Spritzgussteile eine neue Form erstellt werden, wodurch erhebliche Zusatzkosten auftreten. Das tritt insbesondere bei nachträglichen Änderungen der Kabelsatzführung auf, wie sie im Rahmen der Modellpflege bei moderneren Kraftfahrzeugen regelmäßig auftritt.

Aus dem Fachbuch "Faserverbund-Kunststoffe" von G. W. Ehrenstein, Hanser, 2006, ISBN 3-446-22716-4 ist die Verwendung von Fasern (insbesondere Glasfasern oder Polyesterfasern) in Kombination mit Harzen (insbesondere Epoxidharzen) bekannt, um Faserverbundkunststoffe herzustellen.

In der EP 2 497 805 A1 wird ein Klebeband beschrieben, das zum Ummanteln von langgetrecktem Gut wie Kabelsätzen in einem Automobil Verwendung findet. Das Klebeband besteht aus einem Träger mit einer Oberseite und einer Unterseite, wobei der Träger bezogen auf die Querrichtung eine Breite B_{T} aufweist, und an zumindest einer Längskante des Trägers ein Klebstoffstreifen aus einem reaktiven hitzeaktivierbaren Kleber vorgesehen ist, der eine Breite B_{K} von mindestens 3 mm und von höchstens 50 % der Breite B_{T} aufweist.
Zum Ummanteln wird das langgestreckte Gut in axialer Richtung von dem Klebeband umhüllt. Die reaktive, aushärtende Klebemasse führt zu einem Schlauch mit sehr hoher Verschlussfestigkeit, da es zu einer "Strukturverklebung" kommt, jedoch nicht zu einem steifen, formgebenden Verbund.

Die WO 2010/086244 A1 beschreibt eine Klebefolie, umfassend einen Vliesträger und zwei auf den beiden Seiten des Vliesträgers angeordneten Schichten aus hitzeaktivierbaren Klebemassen. Beide Klebemassen sind derart in den Vliesträger eingedrungen, dass insgesamt zwischen 20 % und 92 % des Faserzwischenvolumens des Vliesträgers im Klebfolienverbund mit der Klebemasse durchtränkt sind, mit der Maßgabe, dass die auf den beiden Seiten des Fließträgers eingedrungenen Klebemassen jeweils mindestens 10 % des Faserzwischenvolumens des Fließträgers im Verbund ausmachen.
Zu den Einsatzgebieten gehören die Verklebungen von Metallen, Kunststoffteilen und Gläsern. Eine Verwendung zur Bandagierung von Kabeln ist nicht erwähnt.

Der vorliegenden Erfindung liegt die Aufgabe zugrunde, ein Verfahren zur Verfügung zu stellen, das ein besonders einfaches, preiswertes und schnelles Ummanteln von langgestrecktem Gut wie insbesondere Leitungen oder Kabelsätzen ermöglicht und das zu einem versteiften ummantelten Gut führt.

Gelöst wird diese Aufgabe durch ein Verfahren, wie es im Hauptanspruch niedergelegt ist. Gegenstand der Unteransprüche sind dabei vorteilhafte Weiterbildungen des Verfahrens.

Gegenstand der Erfindung ist ein Verfahren zum Ummanteln von langgestrecktem Gut wie insbesondere Leitungen oder Kabelsätzen, wobei
- ein Klebeband umfassend einen textilen Träger und eine auf mindestens einer Seite des Trägers vollflächig aufgebrachte aushärtbare Klebemasse, wobei die Klebemasse nach dem Aufbringen auf den Träger zu mehr als 25 % in den Träger eingesunken ist, in einer Schraubenlinie um das langgestreckte Gut geführt wird oder das langgestreckte Gut in axialer Richtung von dem Klebeband umhüllt wird,
- das langgestreckte Gut mitsamt dem umhüllenden Klebeband in die gewünschte Anordnung, insbesondere in den Kabelsatzplan gebracht wird,
- das langgestreckte Gut in dieser Anordnung gehalten wird,
- die aushärtbare Klebemasse durch den Zufuhr von Strahlungsenergie wie Wärme zum Aushärten gebracht wird.

Ein Kabelsatzplan entspricht der tatsächlichen räumlichen Anordnung der einzelnen Kabelstränge in dem Kabelsatz, also welcher Kabelstrang an welcher Stelle in welchem Winkel gebogen ist, wo sich Positionen von Abzweigen oder Ausbindungen befinden und mit welchen Steckern die Enden der Kabelstränge belegt sind.

Grundsätzlich dringt jede Klebemasse während der Beschichtung auf einen textilen Träger in den textilen Träger ein, um im Träger verankern zu können. Hierbei werden die einzelnen Fasern oder Garne von der Klebemasse umflossen, so dass die Klebemassenschicht nicht mehr vom Träger zu trennen ist.
Die Verankerung ist üblicherweise so stark, dass ein solches Klebeband problemlos von einer Rolle abgewickelt werden kann, ohne dass die Verankerung der Klebemasse reißt und es zum so genannten Umspulen der Klebemasse kommt (die Klebemasse befindet sich dann auf der Rückseite des Trägers). Des Weiteren wird von den meisten Haftklebebändern erwartet, dass diese vom Untergrund wieder abgelöst werden können, also möglichst spurlos wieder aufgenommen werden können. Das heißt, das Klebeband darf nicht zwischen Träger und Klebemasse adhäsiv brechen.

Die Klebemasse ist nach dem Aufbringen auf den Träger zu mehr als 25 %, weiter vorzugsweise zu mehr als 50 % in den Träger eingesunken.
Ein Zahlenwert von beispielsweise 25 % bedeutet dabei, dass die Klebemasse über eine Schichtdicke von 25 % der Dicke des textilen Trägers eingedrungen ist, also bei einem Träger mit einer Dicke von 100 µm über eine Schichtdicke von 25 µm innerhalb des Trägers, und zwar beginnend von der Fläche des Trägers, auf der die Klebemasse beschichtet ist, und in senkrechter Richtung zu der von der Längs-beziehungsweise Quererrichtung aufgespannten Ebene.
Die Menge an beschichteter Klebemasse wird gemäß einer bevorzugten Ausführungsform so gewählt, dass noch ein Gutteil der teileingesunkenen Klebemassenschicht über den Träger hinausragt.

Vorzugsweise beträgt die Dicke der nichteingesunkenen klebemassenschicht mehr als 25 µm, weiter vorzugsweise mehr als 50 µm, weiter vorzugsweise mehr als 100 µm.

Die Klebemasse führt nach dem insbesondere thermisch induzierten Aushärten zu einer Strukturverklebung und damit Versteifung des Trägers, wobei die Position der Trägerfasern oder Fäden zueinander fixiert wird.
Weiter vorzugsweise ist der Träger nach dem Aufbringen der Klebemasse vollständig, also über 100 % der Trägerdicke, mit der Klebmasse getränkt, so dass alle Trägerfasern fixiert werden. Auch bei dieser Variante der Erfindung kann die Menge der aufgebrachten Klebemasse so gewählt werden, dass noch eine Teilschicht der Klebemasse über den Träger hinausragt.

Das Klebeband wird gemäß einer Ausführungsform in einer Schraubenlinie um das langgestreckte Gut geführt. Die Wicklung erfolgt vorzugsweise so, dass die neue Lage Klebeband die darunter befindliche teilweise überlappt, bevorzugt zu 50 %.
Weiter vorzugsweise kann das Klebeband ein zweites Mal um das Gut geführt werden. Bevorzugt erfolgt diese zweite Wicklung ebenfalls in Form einer Schraubenlinie, vorzugsweise mit Versatz. Die Wicklung kann dabei in gleicher Richtung wie die erste Wicklung erfolgen, also ebenfalls von links nach rechts, sie kann aber auch in entgegengesetzter Richtung erfolgen.

Besonders vorteilhaft ist ein Klebeband, bei dem als Träger ein Gewebe, ein Vlies oder ein Gewirke eingesetzt wird und/oder als Klebemasse ein reaktiver hitzeaktivierbarer Kleber aus Nitrilkautschuk und Phenolharz.
Klebebänder mit derartigen Trägern lassen sich relativ problemlos von Hand einreißen, was für den beschriebenen Einsatzzweck und die besonders bevorzugte Verarbeitung als Wickelband zur Bündelung von Kabeln in Automobilen ebenfalls von besonderer Bedeutung ist.
Eine Reißfestigkeit in Querrichtung von weniger als 10 N, welche nach der AFERA-Norm 4007 bestimmt wird, dient als Kriterium für die Handeinreißbarkeit des Klebebandes. Lediglich bei sehr hohen Flächengewichten oder Dicken der eingesetzten Träger kann die Handeinreißbarkeit nicht oder nur eingeschränkt gegeben sein. In diesem Fall können aber Perforationen vorhanden sein, um die Handeinreißbarkeit zu optimieren.

Als Träger können alle bekannten textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.
Die durch die Partikelschicht hindurchgenadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Hoftex Group AG beziehbar. Ein Malivlies ist dadurch gekennzeichnet, dass ein Querfaservlies durch die Bildung von Maschen aus Fasern des Vlieses verfestigt wird. Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden. Die zusätzliche Einbringbarkeit weiterer durchstechbarer Flächengebilde und/oder streufähiger Medien ist gegeben. Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.
Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser inline oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, dass das Bindemittel nach Ende des Vlies-Herstellprozesses seine Klebrigkeit verloren hat. Vorteilhaft ist, dass durch thermische Behandlung flüchtige Komponenten wie Faserhilfsstoffe entfernt werden und somit ein Vlies mit günstigen Foggingwerten entsteht, so dass bei Einsatz einer foggingarmen Klebemasse ein Klebeband mit besonders günstigen Foggingwerten produziert werden kann, ebenso zeigt somit auch der Träger einen sehr geringen Foggingwert.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie)Fasern (Stapelfaser oder Endlosfilament) aus synthetischen Polymeren, auch synthetische Fasern genannt, aus Polyester wie Polyethylenterephthalat, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.
Des Weiteren sind Garne, gefertigt aus den angegebenen Rohstoffen, ebenfalls geeignet.

Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.
Die Kettfäden und/oder die Schussfäden können dabei jeweils nur aus synthetischen Fäden oder aus Fäden aus natürlichen Rohstoffe bestehen.

Bevorzugt werden als Material für den Träger Polyester oder Glas, besonders bevorzugt Polyester, eingesetzt aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus haben Polyester und Glas die Vorteile, dass sie zu einem sehr abriebfesten und temperaturbeständigen Träger führen, was für den speziellen Einsatzzweck zur Bündelung von Kabeln in Automobilen und beispielsweise im Motorraum von besonderer Wichtigkeit ist.

Vorteilhaft liegt das Flächengewicht des textilen Trägers zwischen 30 g/m² und 300 g/m² weiter vorteilhaft zwischen 50 g/m² und 200 g/m², besonders vorteilhaft zwischen 60 g/m² und 150 g/m², ganz besonders vorteilhaft zwischen 70 g/m² und 100 g/m².

Gemäß einer besonders vorteilhaften Ausführungsform der Erfindung werden als Träger ein Gewebe oder ein Vlies aus Polyester eingesetzt, die ein Flächengewicht zwischen 60 g/m² und 150 g/m² aufweisen.

Gemäß einer vorteilhaften Ausführungsform der Erfindung ist die aushärtbare Klebemasse selbstklebend, oder auf der aushärtbaren Klebemasse ist zumindest partiell eine Selbstklebemassenschicht aufgebracht.
Dann können durch das Klebeband Kabel gebündelt werden, und/oder das Klebeband kann ohne weitere Hilfsmittel auf dem Kabelsatz durch Spiralwicklung befestigt werden.

Eine Selbstklebemasse, auch Haftklebemasse genannt, ist eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Die Steifigkeit des Kabelsatzes kann durch eine selbstklebende Klebemasse erhöht werden, weil auch die Klebmasse mit den Kabeln des Kabelsatzes verklebt und so deren Position zueinander und zum umgebenden (bereits steifen) Träger fixiert.

Erfindungsgemäß wird unter der aushärtbaren Klebemasse eine Strukturklebemasse (Konstruktionsklebstoff, Montageklebstoff) verstanden (siehe Römpp, Georg Thieme Verlag, Dokumentkennung RD-19-04489, letzte Aktualisierung: September 2012). Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: "bonding agents used for transferring required loads between adherends exposed to service environments typical for the structure involved"). Es sind also Klebstoffe für chemische und physikalisch hoch beanspruchbare Klebungen, die im ausgehärteten Zustand zur Verfestigung der geklebten Substrate beitragen und zur Herstellung von Konstruktionen aus Metallen, Keramik, Beton, Holz oder verstärkten Kunststoffen verwendet werden. Die erfindungsgemäßen Strukturklebstoffe basieren insbesondere auf (wärmehärtbaren) Reaktionsklebstoffen (Phenolharze, Epoxidharze, Polyimide, Polyurethane und andere).

Die aushärtbare Klebemasse kann nach dem Aushärten elastisch sein, um eine dauerhafte, gegen Schwingungen und Verwindungen unempfindliche Ummantelung sicherzustellen.

Als Klebemassen finden insbesondere reaktive hitzeaktivierbare Klebemassen Verwendung.
Diese besitzen eine sehr gute Dimensionsstabilität, wenn die elastomere Komponente eine hohe Elastizität aufweist. Weiterhin bedingen die Reaktivharze, dass eine Vernetzungsreaktion eintreten kann, die die Verklebungsfestigkeit deutlich erhöht. So lassen sich zum Beispiel hitzeaktivierbare Klebemassen auf Basis von Nitrilkautschuken und Phenolharzen einsetzen, zum Beispiel kommerziell erhältlich im Produkt tesa® 8401 der Firma tesa.

Gemäß einer vorteilhaften Ausführungsform besteht die Klebemasse zumindest aus
a) einem Polyamid mit Amino- und/oder Säureendgruppen,
b) einem Epoxidharz,
c) gegebenenfalls einem Weichmacher,
wobei das Polyamid bei Temperaturen von mindestens 150 °C mit dem Epoxidharz reagiert und das Verhältnis in Gewichtsanteilen von a) und b) zwischen 50:50 bis 99:1 liegt.

Weiter vorzugsweise besteht die Klebemasse aus
i) einem thermoplastischen Polymer mit einem Anteil von 30 bis 89,9 Gew.-%,
ii) einem oder mehreren klebrigmachenden Harzen mit einem Anteil von 5 bis 50 Gew.-% und/oder
iii) Epoxidharze mit Härtern, gegebenenfalls auch Beschleunigern, mit einem Anteil von 5 bis 40 Gew.-%.
Diese Klebemasse ist eine Mischung von reaktiven Harzen, die bei Raumtemperatur vernetzen und ein dreidimensionales, hochfestes Polymernetzwerk bilden, und von dauerelastischen Elastomeren, die einer Versprödung des Produktes entgegenwirken. Das Elastomer kann bevorzugt aus der Gruppe der Polyolefine, Polyester, Polyurethane oder Polyamide stammen oder ein modifizierter Kautschuk sein wie zum Beispiel Nitrilkautschuk.
Die insbesondere bevorzugten thermoplastischen Polyurethane (TPU) sind als Reaktionsprodukte aus Polyester- oder Polyetherpolyolen und organischen Diisocyanaten wie Diphenylmethandiisocyanat bekannt. Sie sind aus überwiegend linearen Makromolekülen aufgebaut. Solche Produkte sind zumeist in Form elastischer Granulate im Handel erhältlich, zum Beispiel von der Bayer AG unter dem Handelsnamen "Desmocoll".
Durch Kombination von TPU mit ausgewählten verträglichen Harzen kann die Erweichungstemperatur der Klebemasse gesenkt werden. Parallel dazu tritt sogar eine Erhöhung der Adhäsion auf. Als geeignete Harze haben sich beispielsweise bestimmte Kolophonium-, Kohlenwasserstoff- und Cumaronharze erwiesen.
Alternativ dazu kann die Reduzierung der Erweichungstemperatur der Klebemasse durch die Kombination von TPU mit ausgewählten Epoxidharzen auf der Basis von Bisphenol A und/oder F und einem latenten Härter erreicht werden. Eine Klebemasse aus einem derartigen System erlaubt ein Nachhärten der Klebfuge, entweder allmählich bei Raumtemperatur ohne jeden weiteren äußeren Eingriff oder kurzzeitig durch eine gezielte Temperierung.

Durch die chemische Vernetzungsreaktion der Harze werden große Festigkeiten zwischen der Klebemasse und dem Träger erzielt und eine hohe innere Festigkeit des Produktes erreicht.
Die Zugabe dieser reaktiven Harz/Härtersystemen führt dabei auch zu einer Erniedrigung der Erweichungstemperatur der oben genannten Polymere, was ihre Verarbeitungstemperatur und -geschwindigkeit vorteilhaft senkt. Das geeignete Produkt ist ein bei Raumtemperatur oder leicht erhöhten Temperaturen selbsthaftendes Produkt. Beim Erhitzen des Produktes kommt es kurzfristig auch zu einer Erniedrigung der Viskosität wodurch das Produkt auch raue Oberflächen benetzen kann.
Die Zusammensetzungen für die Klebemasse lassen sich durch Veränderung von Rohstoffart und -anteil in weitem Rahmen variieren. Ebenso können weitere Produkteigenschaften wie beispielsweise Farbe, thermische oder elektrische Leitfähigkeit durch gezielte Zusätze von Farbstoffen, mineralischen beziehungsweise organischen Füllstoffen und/oder Kohlenstoff- beziehungsweise Metallpulvern erzielt werden.

Als Nitrilkautschuke können in erfindungsgemäßen Klebmassen insbesondere alle Acrylnitril-Butadien-Copolymere zum Einsatz kommen mit einem Acrylnitrilgehalt von 15 bis 50 Gew.-%. Ebenso sind auch Copolymere aus Acrylnitril, Butadien und Isopren einsetzbar. Dabei ist der Anteil von 1,2-verknüpftem Butadien variabel. Die vorgenannten Polymere können zu einem unterschiedlichen Grad hydriert sein und auch vollständig hydrierte Polymere mit einem Doppelbindungsanteil von unter 1 % sind nutzbar.

Alle diese Nitrilkautschuke sind zu einem gewissen Grad carboxyliert, bevorzugt liegt der Anteil der Säuregruppen bei 2 bis 15 Gew.-%. Kommerziell sind solche Systeme zum Beispiel unter dem Namen Nipol 1072 oder Nipol NX 775 der Firma Zeon erhältlich. Hydrierte carboxylierte Nitrilkautschuke sind unter dem Namen Therban XT VP KA 8889 von der Firma Lanxess kommerzialisiert.

Um die Adhäsion zu erhöhen, ist auch der Zusatz von mit den Nitrilkautschuken verträglichen Klebharzen möglich.

Als Epoxidharze werden üblicherweise sowohl monomere als auch oligomere Verbindungen mit mehr als einer Epoxidgruppe pro Molekül verstanden. Dieses können Reaktionsprodukte von Glycidestern oder Epichlorhydrin mit Bisphenol A oder Bisphenol F oder Mischungen aus diesen beiden sein. Einsetzbar sind ebenfalls Epoxidnovolakharze gewonnen durch Reaktion von Epichlorhydrin mit dem Reaktionsprodukt aus Phenolen und Formaldehyd. Auch monomere Verbindungen mit mehreren Epoxidendgruppen, die als Verdünner für Epoxidharze eingesetzt werden, sind verwendbar. Ebenfalls sind elastisch modifizierte Epoxidharze einsetzbar.
Beispiele von Epoxidharzen sind Araldite™ 6010, CY-281™, ECN™ 1273, ECN™ 1280, MY 720, RD-2 von Ciba Geigy, DER™ 331, 732, 736, DEN™ 432 von Dow Chemicals, Epon™ 812, 825, 826, 828, 830 etc. von Shell Chemicals, HPT™ 1071, 1079 ebenfalls von Shell Chemicals, Bakelite™ EPR 161, 166, 172, 191, 194 etc. der Bakelite AG.

Kommerzielle aliphatische Epoxidharze sind zum Beispiel Vinylcyclohexandioxide wie ERL-4206, 4221, 4201, 4289 oder 0400 von Union Carbide Corp.

Elastifizierte Epoxidharze sind erhältlich von der Firma Noveon unter dem Namen Hycar.

Epoxidverdünner, monomere Verbindungen mit mehreren Epoxidgruppen sind zum Beispiel Bakelite™ EPD KR, EPD Z8, EPD HD, EPD WF, etc. der Bakelite AG oder Polypox™ R 9, R12, R 15, R 19, R 20 etc. der Firma UCCP.

Weiter vorzugsweise enthält die Klebemasse mehr als ein Epoxidharz.

Als Novolak-Harze können zum Beispiel eingesetzt werden, Epi-Rez™ 5132 von Celanese, ESCN-001 von Sumitomo Chemical, CY-281 von Ciba Geigy, DEN™ 431, DEN™ 438, Quatrex 5010 von Dow Chemical, RE 305S von Nippon Kayaku, Epiclon™ N673 von DaiNippon Ink Chemistry oder Epicote™ 152 von Shell Chemical.

Weiterhin lassen sich als Reaktivharze auch Melamin-Harze einsetzen wie zum Beispiel Cymel™ 327 und 323 von Cytec.

Weiterhin lassen sich als Reaktivharze auch Terpenphenolharze wie zum Beispiel NIREZ™ 2019 von Arizona Chemical einsetzen.

Weiterhin lassen sich als Reaktivharze auch Phenolharze wie zum Beispiel YP 50 von Toto Kasei, PKHC von Union Carbide Corp. und BKR 2620 von Showa Union Gosei Corp. einsetzen.

Weiterhin lassen sich als Reaktivharze auch Phenolresolharze auch in Kombination mit anderen Phenolharzen einsetzen.

Weiterhin lassen sich als Reaktivharze auch Polyisocyanate wie zum Beispiel Coronate™ L von Nippon Polyurethan Ind., Desmodur™ N3300 oder Mondur™ 489 von Bayer einsetzen.

In einer vorteilhaften Ausführung der erfindungsgemäßen Klebemasse auf Basis Nitrilkautschuk sind außerdem klebkraftsteigernde (klebrigmachende) Harze zugesetzt; sehr vorteilhaft zu einem Anteil von bis zu 30 Gew.-%, bezogen auf die Klebemasse.

Als zuzusetzende klebrigmachende Harze sind ausnahmslos alle vorbekannten und in der Literatur beschriebenen Klebharze einsetzbar. Bevorzugt geeignet sind unter anderem nicht hydrierte, partiell- oder vollständig hydrierte Harze auf Basis von Inden, Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder Cg-Monomerströmen, Polyterpenharze auf Basis von α-Pinen und/oder β-Pinen und/oder δ-Limonen oder hydrierte Polymerisate von bevorzugt reinen C₈- und C₉-Aromaten.
Beliebige Kombinationen dieser und weiterer Harze können eingesetzt werden, um die Eigenschaften der resultierenden Klebmasse wunschgemäß einzustellen. Im Allgemeinen lassen sich alle mit dem entsprechenden Polymer kompatiblen (löslichen) Harze einsetzen. Auf die Darstellung des Wissensstandes im "Handbook of Pressure Sensitive Adhesive Technology" von Donatas Satas (van Nostrand, 1989) sei ausdrücklich hingewiesen.

Neben den schon genannten säure- oder säureanhydridmodifizierten Nitrilkautschuken können auch noch weitere Elastomere eingesetzt werden. Neben weiteren säure- oder säureanhydridmodifizierten Elastomeren können auch nicht modifizierte Elastomere zum Einsatz kommen wie zum Beispiel Polyvinylalkohol, Polyvinylacetat, Styrolblockcopolymere, Polyvinylformal, Polyvinylbutyral oder lösliche Polyester.
Auch Copolymere mit Maleinsäureanhydrid wie zum Beispiel ein Copolymer aus Polyvinylmethylether und Maleinsäureanhydrid, zum Beispiel zu beziehen unter dem Namen Gantrez™, vertrieben von der Firma ISP, sind einsetzbar.

Durch die chemische Vernetzung der Harze mit den Elastomeren werden sehr große Festigkeiten innerhalb der Klebemasse erreicht.

Als weitere Additive können typischerweise genutzt werden:
- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Füllstoffe wie zum Beispiel Siliziumdioxid, Glas (gemahlen oder in Form von Kugeln), Aluminiumoxide, Zinkoxide, Calciumcarbonate, Titandioxide, Ruße, Metallpulver, etc.
- Farbpigmente und Farbstoffe sowie optische Aufheller

Durch den Einsatz von Weichmachern kann die Elastizität der vernetzten Klebmasse erhöht werden. Als Weichmacher können dabei zum Beispiel niedermolekulare Polyisoprene, Polybutadiene, Polyisobutylene oder Polyethylenglykole und Polypropylenglykole eingesetzt werden oder Weichmacher auf Basis Polyethylenoxiden, Phosphatestern, aliphatischen Carbonsäureestern und Benzoesäureestern. Weiterhin lassen sich auch aromatische Carbonsäureester, höhermolekulare Diole, Sulfonamide und Adipinsäureester einsetzen.

Da die eingesetzten Nitrilkautschuke auch bei hohen Temperaturen keine zu niedrige Viskosität besitzen, kommt es während des Verklebens und Heißpressens nicht zum Austritt der Klebmasse aus der Klebfuge. Während dieses Vorgangs vernetzen die Epoxidharze mit den Elastomeren, es ergibt sich ein dreidimensionales Netzwerk.

Durch die Zugabe von so genannten Beschleunigern kann die Reaktionsgeschwindigkeit weiter erhöht werden.
Beschleuniger können zum Beispiel sein:
- tertiäre Amine wie Benzyldimethylamin, Dimethylaminomethylphenol, Tris(dimethylaminomethyl)phenol
- Bortrihalogenid-Amin-Komplexe
- substituierte Imidazole
- Triphenylphosphin

Als Beschleuniger eignen sich zum Beispiel Imidazole, kommerziell erhältlich unter 2M7, 2E4MN, 2PZ-CN, 2PZ-CNS, P0505, L07N von Shikoku Chem. Corp. oder Curezol 2MZ von Air Products. Weiterhin eignen sich als Vernetzer HMTA (Hexamethylentetramin) Zusätze.

Weiterhin können optional Füllstoffe (zum Beispiel Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, klebkraftverstärkende Additive und Thermoplaste, Compoundierungsmittel und/oder Alterungsschutzmittel, zum Beispiel in Form von primären und sekundären Antioxidantien oder in Form von Lichtschutzmitteln zugesetzt sein.

In einer weiteren bevorzugten Ausführungsform werden der Klebemasse weitere Additive hinzugesetzt, wie zum Beispiel Polyvinylformal, Polyacrylat-Kautschuke, Chloropren-Kautschuke, Ethylen-Propylen-Dien Kautschuke, Methyl-Vinyl-Silikon Kautschuke, Fluorsilikon Kautschuke, Tetrafluorethylen-Propylen-Copolymer Kautschuke, Butylkautschuke, Styrol-Butadien Kautschuke.
Polyvinylbutyrale sind unter Butvar™ von Solucia, unter Pioloform™ von Wacker und unter Mowital™ von Kuraray erhältlich. Polyacrylat-Kautschuke sind unter Nipol AR™ von Zeon erhältlich. Chloropren-Kautschuke sind unter Baypren™ von Bayer erhältlich. Ethylen-Propylen-Dien-Kautschuke sind unter Keltan™ von DSM, unter Vistalon™ von Exxon Mobil und unter Buna EP™ von Bayer erhältlich. Methyl-Vinyl-Silikon-Kautschuke sind unter Silastic™ von Dow Corning und unter Silopren™ von GE Silicones erhältlich. Fluorsilikon-Kautschuke sind unter Silastic™ von GE Silicones erhältlich. Butyl-Kautschuke sind unter Esso Butyl™ von Exxon Mobil erhältlich. Styrol-Butadien-Kautschuke sind unter Buna S™ von Bayer, und Europrene™ von Eni Chem und unter Polysar S™ von Bayer erhältlich.
Polyvinylformale sind unter Formvar™ von Ladd Research erhältlich.

In einer weiteren bevorzugten Ausführungsform werden der Klebemasse weitere Additive hinzugesetzt, wie zum Beispiel thermoplastische Materialien aus der Gruppe der folgenden Polymere: Polyurethane, Polystyrol, Acrylnitril-Butadien-Styrol-Terpolymere, Polyester, Hart-Polyvinylchloride, Weich-Polyvinylchloride, Polyoxymethylene, Polybutylenterephthalate, Polycarbonate, fluorierte Polymere, wie zum Beispiel Polytetrafluorethylen, Polyamide, Ethylenvinylacetate, Polyvinylacetate, Polyimide, Polyether, Copolyamide, Copolyester, Polyolefine wie zum Beispiel Polyethylen, Polypropylen, Polybuten, Polyisobuten und Poly(meth)acrylate.

Die Klebkraft der hitzeaktivierbaren Klebemasse kann durch weitere gezielte Additivierung gesteigert werden. So lassen sich zum Beispiel Polyimin- oder Polyvinylacetat-Copolymere auch als klebkraftfördernde Zusätze verwenden.

Zur Herstellung des Klebestreifens werden die Bestandteile der Klebmasse in einem geeigneten Lösungsmittel, zum Beispiel Butanon, gelöst und auf ein flexibles Substrat, das mit einer Releaseschicht versehen ist, zum Beispiel einem Trennpapier oder einer Trennfolie, beschichtet und getrocknet, so dass die Masse von dem Substrat leicht wieder entfernt werden kann. Nach entsprechender Konfektionierung können Stanzlinge, Rollen oder sonstige Formkörper bei Raumtemperatur hergestellt werden. Entsprechende Formkörper werden dann vorzugsweise bei erhöhter Temperatur auf den Träger aufgeklebt.
Die zugemischten Epoxidharze gehen bei der Laminiertemperatur noch keine chemische Reaktion ein, sondern erst reagieren erst bei der Herstellung der Ummantelung aus dem erfindungsgemäßen Klebeband mit den Säure- oder Säureanhydridgruppen reagieren. Bevorzugt vernetzt der Kleber bei Temperaturen über 150 °C.

Vorteilhaft liegt die Dicke der aufgebrachten Klebemasse zwischen 50 µm und 500 µm, weiter vorteilhaft zwischen 100 µm und 250 µm, besonders vorteilhaft zwischen 100 µm und 200 µm.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien.
Bevorzugt wird ein nicht-fusselndes Material eingesetzt wie eine Kunststofffolie oder ein gut verleimtes, langfaseriges Papier.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann in Form einer Rolle, also in Form einer archimedischen Spirale auf sich selbst aufgerollt, hergestellt werden. Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als dehäsiv (abhäsiv) wirkenden Stoffen beziehungsweise zur Antihaftbeschichtung ausgerüstet sein.

Die Klebemasse kann in Längsrichtung des Klebebands in Form eines Streifens aufgebracht sein, der eine geringere Breite aufweist als der Träger des Klebebands.
Je nach Verwendungsfall können auch mehrere parallele Streifen des Klebers auf dem Trägermaterial beschichtet sein. Die Lage des Streifens auf dem Träger ist frei wählbar, wobei eine Anordnung direkt an einer der Kanten des Trägers bevorzugt wird.
Die Klebemasse ist vollflächig auf dem Träger aufgetragen.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird.

Weiter vorzugsweise zerstört das Klebeband bei Verklebung auf Kabeln mit PVC-Ummantelung und auf Kabeln mit Polyolefin-Ummantelung dieselbigen nicht, wenn ein Verbund aus Kabeln und Klebeband gemäß der LV 312 bei Temperaturen über 100 °C und bis zu 3000 h gelagert und anschließend die Kabel um einen Dorn gebogen werden. Das erfindungsgemäße Klebeband eignet sich hervorragend für das Umwickeln von Kabeln, lässt sich für eine einfache Verarbeitung leicht abwickeln und zeigt keine Kabelversprödung auch bei den hohen Temperaturklassen T3 und T4 über 3000 h.

Besonders vorteilhafte Ausführungsformen der Erfindung umfassen folgende Klebebandvarianten:
- Variante 1: Klebmasse einseitig (Träger nicht vollständig durchdrungen)
   ∘ Träger: Vlies oder Gewebe: 30 g/m² bis 300 g/m² (bevorzugt aus Polyester)
   ∘ Klebemasse: 100 µm bis 500 µm
   ∘ Aufbau: Die Klebemasse ist zu mehr als 10 % aber zu weniger als 100 % in den Träger eingedrungen.
- Variante 2: Klebmasse doppelseitig (Träger nicht vollständig durchdrungen)
   ∘ Träger: Vlies oder Gewebe: 30 g/m² bis 300 g/m² (bevorzugt aus Polyester)
   ∘ Klebemasse: 100 µm bis 500 µm
   ∘ Aufbau: Die Klebemasse ist auf beiden Seiten des Trägers jeweils zu mehr als 10 % aber zu weniger als 50 % in den Träger eingedrungen.
- Variante 3: Träger vollständig durchdrungen
   ∘ Träger: Vlies oder Gewebe: 50 g/m² bis 300 g/m² (bevorzugt aus Polyester)
   ∘ Klebemasse: 100 µm bis 500 µm
   ∘ Aufbau: Die Klebemasse ist zu 100 % in den Träger eingedrungen und ragt mit mindestens 25 µm über den Träger hinaus.
- Variante 4: mehrere Träger nicht vollständig durchdrungen. Die Variante ist besonders interessant, wenn das langgestreckte Gut in axialer Richtung von dem Klebeband umhüllt wird.
   ∘ Aufbau (von unten nach oben)
      ▪ Klebemasse: 100 µm bis 500 µm
      ▪ Träger: Vlies oder Gewebe: 50 g/m² bis 300 g/m² (bevorzugt aus Polyester)
      ▪ Klebemasse: 100 µm bis 500 µm
      ▪ Träger: Vlies oder Gewebe: 50 g/m² bis 300 g/m² (bevorzugt aus Polyester)
      ▪ und gegebenenfalls fortsetzend. Dabei kann die oberste Schicht entweder eine Masse oder ein Träger sein.
      ▪ Die Träger können je nach Bedarf teilweise oder vollständig durchdrungen sein.

Im Folgenden soll das Klebeband anhand mehrerer Figuren beispielhaft näher erläutert werden, ohne die Erfindung auf diese Ausführungsformen zu beschränken.

Es zeigen:
- Figur 1: das Klebeband im seitlichen Schnitt,
- Figur 2: einen Ausschnitt eines Kabelbaums, der sich aus einer Bündelung von einzelnen Kabeln zusammensetzt und der mit dem erfindungsgemäßen Klebeband ummantelt ist.

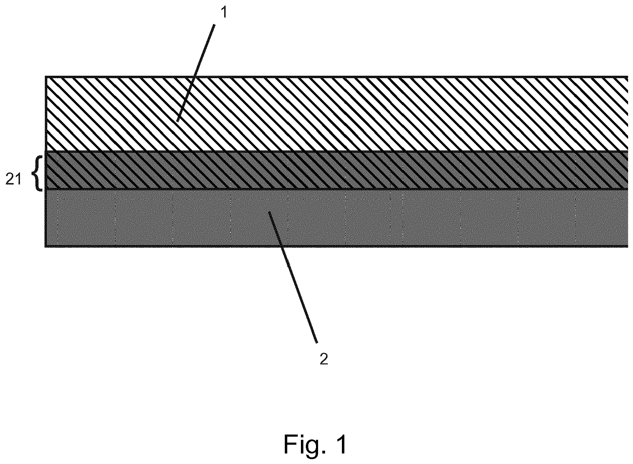

In der Figur 1 ist im Schnitt in Querrichtung (Querschnitt) das Klebeband gezeigt, das aus einem Vliesträger 1 besteht, auf den einseitig eine Schicht einer aushärtbaren Klebemasse 2 aufgebracht ist, die zusätzlich selbstklebend ist.
Die Klebemasse ist zu 25 % in den Träger eingesunken (21), was eine optimale Verankerung bewirkt.

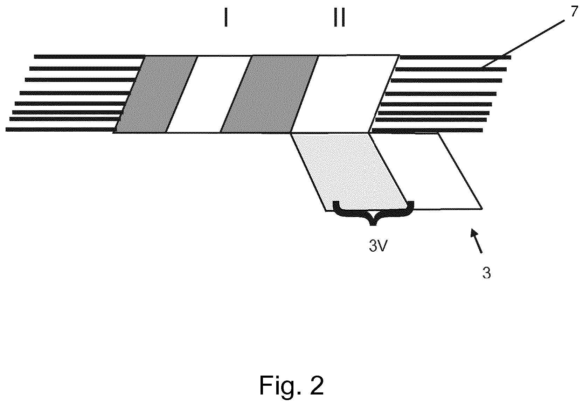

In der Figur 2 ist ein Ausschnitt eines Kabelbaums gezeigt, der sich aus einer Bündelung von einzelnen Kabeln 7 zusammensetzt und der mit dem erfindungsgemäßen, hier vereinfacht dargestellten Klebeband 3 nach der in Figur 1 beschriebenen Variante ummantelt ist. Das Klebeband 3 wird in einer spiralförmigen Bewegung um den Kabelbaum geführt.
Der gezeigte Ausschnitt des Kabelbaums zeigt zwei Wicklungen I und II des Klebebands 3. Nach links hin würden sich weitere Wicklungen erstrecken, diese sind hier nicht dargestellt.
Die Wicklung des Klebebands 3 erfolgt mit einem Versatz 3V von 50 %, was in dieser Figur durch die dunklere Farbe angedeutet ist.

### Beispiele

Das erfindungsgemäße Klebeband wird nachfolgend in bevorzugter Ausführung anhand mehrerer Beispiele beschrieben, ohne damit die Erfindung irgendeiner Weise zu beschränken.

### Beispiel 1: Einseitig mit einer hitzeaktivierbaren Klebemasse ausgerüstetes Vlies

- Träger: Maliwatt-Vlies mit 70 g/m²
- Klebemasse: Nitrilkautschuk und Phenolharz.

Der Maliwattträger wird mit der Klebemasse auf Basis Nitrilkautschuk und Phenolharz bei einer Temperatur von 130 °C heißlaminiert, wodurch die Klebemasse zu 25 % in den Träger eindringt. Als Laminator wird ein Taschenlaminator LM 260 (S2 Laminiertechnik GmbH) bei einer Temperatur von 130 °C benutzt. Es erfolgt ein Durchlauf.

Bei der Ummantelung eines Kabelsatzes wird das Klebeband mit einer Überlappung von 50 % in einer Schraubenlinie um acht Adern eines Kabels mit einer ETFE-Ummantelung geführt. Die ummantelten Kabel haben eine Länge von 120mm.

Dann erfolgt die Messung der Biegesteifigkeit F1 nach einer Methode analog zu LV 112 "Biegekraft der Leitungen". Der Abstand lv beträgt 100 mm. Es wird die Biegekraft F1 nach 15 mm Verformung (nur eine Biegung) gemessen.

Anschließend wird der Kabelsatz für 15 Minuten bei 175 °C in einem Umluftofen ausgehärtet.

Dann erfolgt die Messung der Biegesteifigkeit F2 nach einer Methode analog zu LV 112 "Biegekraft der Leitungen". Der Abstand lv beträgt 100 mm. Es wird die Biegekraft F2 nach 15 mm Verformung (nur eine Biegung) gemessen.

Der Festigkeitsfaktor beschreibt die Steigerung der Biegekraft nach dem Aushärten und wird als Quotient aus Zähler F2 zu Nenner F1 berechnet.

### Beispiel 2: Beidseitig mit einer hitzeaktivierbaren Klebemasse ausgerüstetes Vlies

- Träger: Maliwatt-Vlies mit 70 g/m²
- Klebemasse: Nitrilkautschuk und Phenolharz

Der Maliwattträger wird von beiden Seiten mit einer Klebemasse auf Basis Nitrilkautschuk und Phenolharz bei einer Temperatur von 130 °C heißlaminiert, wodurch die Klebemasse jeweils zu 25 % in den Träger eindringt. Als Laminator wird ein Taschenlaminator LM 260 (S2 Laminiertechnik GmbH) bei einer Temperatur von 130 °C benutzt. Es erfolgt ein Durchlauf.

Bei der Ummantelung eines Kabelsatzes wird das Klebeband mit einer Überlappung von 50 % in einer Schraubenlinie um 16 Adern eines Kabels mit einer ETFE-Ummantelung geführt. Die ummantelten Kabel haben eine Länge von 120 mm.

Dann erfolgt die Messung der Biegesteifigkeit F1 nach einer Methode analog zu LV 112 "Biegekraft der Leitungen". Der Abstand lv beträgt 100 mm. Es wird die Biegekraft F1 nach 15 mm Verformung (nur eine Biegung) gemessen.

Anschließend wird der Kabelsatz für 15 Minuten bei 175 °C in einem Umluftofen ausgehärtet.

Dann erfolgt die Messung der Biegesteifigkeit F2 nach einer Methode analog zu LV 112 "Biegekraft der Leitungen". Der Abstand lv beträgt 100 mm. Es wird die Biegekraft F2 nach 15 mm Verformung (nur eine Biegung) gemessen.

Der Festigkeitsfaktor beschreibt die Steigerung der Biegekraft nach dem Aushärten und wird als Quotient aus Zähler F2 zu Nenner F1 berechnet.

| Muster | Probendurchmesser [mm] | F1 (15mm) [N] | F2 (15mm) [N] | Festigkeitsfaktor = F2/F1 [--] |
|---|---|---|---|---|
| Var 1, Maliwatt, 200 µm Masse | 10 | 41,6 | 128,5 | 3,09 |
| Var 1, Maliwatt, 200 µm Masse, doppelt gewickelt | 13 | 32,1 | 141,1 | 4,40 |
| Var 1, Maliwatt, 125 µm Masse | 10 | 39,4 | 98,1 | 2,49 |
| Var 1, Maliwatt, 125 µm Masse, doppelt gewickelt | 13 | 35,7 | 121,2 | 3,39 |
| Var 2, Maliwatt, 200 µm Masse | 12 | 31,7 | 201,4 | 6,35 |
| Var 1, Nadelvlies, 200 µm Masse | 13 | 38,0 | 76,3 | 2,01 |
| Var 1, Nadelvlies, 200 µm Masse, doppelt gewickelt | 17 | 39,3 | 90,1 | 2,29 |
| Var 1, Nadelvlies, 125 µm Masse | 11 | 43,0 | 71,6 | 1,67 |
| Var 1, Nadelvlies, 125 µm Masse, doppelt gewickelt | 15 | 49,7 | 100,0 | 2,01 |

| | | | | |
|---|---|---|---|---|
| Maliwatt: 72 g/m², Polyester Nadelvlies: 100 g/m², Masse 200 µm: HAF 8400 Masse 125 µm: HAF 8475 | | | | |

tesa® HAF 8475 und tesa® HAF 8400 sind trägerlose hitzeaktivierbare Folien auf Basis von Nitrilkautschuk und Phenolharz.

Ein Vergleich der Varianten mit Maliwatt zu denen mit einem Nadelvlies zeigt, dass die innere Festigkeit des Nadelvlieses wesentlich geringer ist als diejenige des Maliwatts und damit eine wesentlich geringere Biegesteifigkeit erhalten wird.

Durch das Aushärten der Klebemasse tritt eine sprunghafte Steigerung der Biegesteifigkeit auf, die sich in einem hohen Festigkeitsfaktor = F2 / F1 widerspiegelt. Insbesondere die erfindungsgemäßen Varianten mit einem Maliwattträger weisen überraschend hohe und derartig nicht vorsehbare Steifigkeiten auf.

## Patentansprüche

1. Verfahren zum Ummanteln von langgestrecktem Gut wie insbesondere Leitungen oder Kabelsätzen, wobei
ein Klebeband umfassend einen textilen Träger und eine auf mindestens einer Seite des Trägers vollflächig aufgebrachte aushärtbare Klebemasse, wobei die Klebemasse nach dem Aufbringen auf den Träger zu mehr als 25 % in den Träger eingesunken ist (bestimmt nach der in der Beschreibung angegebenen Methode), in einer Schraubenlinie um das langgestreckte Gut geführt wird oder das langgestreckte Gut in axialer Richtung von dem Klebeband umhüllt wird,
das langgestreckte Gut mitsamt dem umhüllenden Klebeband in die gewünschte Anordnung, insbesondere in den Kabelsatzplan gebracht wird,
das langgestreckte Gut in dieser Anordnung gehalten wird,
die aushärtbare Klebemasse durch die Zufuhr von Strahlungsenergie wie Wärme zum Aushärten gebracht wird.

2. Verfahren nach Anspruch 1,
**dadurch gekennzeichnet, dass**
die Klebemasse nach dem Aufbringen auf den Träger zu mehr als 50 % in den Träger eingesunken ist.

3. Verfahren nach Anspruch 1,
**dadurch gekennzeichnet, dass**
die Klebemasse nach dem Aufbringen auf den Träger den Träger vollständig durchtränkt.

4. Verfahren nach einem der vorstehenden Ansprüche 1 bis 3,
**dadurch gekennzeichnet, dass**
die aushärtbare Klebemasse selbstklebend ist oder auf der aushärtbaren Klebemasse zumindest partiell eine Selbstklebemassenschicht aufgebracht ist.

5. Verfahren nach zumindest einem der vorherigen Ansprüche,
**dadurch gekennzeichnet, dass**
der Träger ein Flächengewicht von 30 bis 300 g/m², vorzugsweise 50 bis 200 g/m², weiter vorzugsweise 60 bis 150 g/m² aufweist.

6. Verfahren nach zumindest einem der vorherigen Ansprüche,
**dadurch gekennzeichnet, dass**
als Träger ein Gewebe, ein Vlies oder ein Gewirke eingesetzt wird.

7. Verfahren nach zumindest einem der vorherigen Ansprüche,
**dadurch gekennzeichnet, dass**
als Träger aus Polyester oder Glasfasern besteht.

8. Verfahren nach zumindest einem der vorherigen Ansprüche,
**dadurch gekennzeichnet, dass**
als aushärtbare Klebemasse ein reaktiver hitzeaktivierbarer Kleber aus Nitrilkautschuk und Phenolharz eingesetzt wird.

## Claims

1. Method for jacketing elongate material such as more particularly leads or cable looms, where
an adhesive tape comprising a textile carrier and a curable adhesive applied to at least one side of the carrier over the entire surface, wherein the adhesive, following application to the carrier, has sunken into the carrier to an extent of more than 25% (determined by the methods specified in the description), is passed in a helical line around the elongate material, or the elongate material is wrapped in the axial direction by the adhesive tape,
the elongate material together with the adhesive tape wrapping is brought into the desired disposition, more particularly into the cable loom plane,
the elongate material is held in this disposition,
the curable adhesive is brought to cure by the supply of radiant energy such as heat.

2. Method according to Claim 1,
**characterized in that**
the adhesive, following application to the carrier, has sunken into the carrier to an extent of more than 50%.

3. Method according to Claim 1,
**characterized in that**
the adhesive, following application to the carrier, completely saturates the carrier.

4. Method according to any of the preceding Claims 1 to 3, **characterized in that**
the curable adhesive is self-adhesive or a layer of self-adhesive is applied at least partially to the curable adhesive.

5. Method according to at least one of the preceding claims,
**characterized in that**
the carrier has a basis weight of 30 to 300 g/m², preferably 50 to 200 g/m², more preferably 60 to 150 g/m².

6. Method according to at least one of the preceding claims,
**characterized in that**
a woven, nonwoven or knitted fabric is used as carrier.

7. Method according to at least one of the preceding claims,
**characterized in that**
the carrier consists of polyester or of glass fibres.

8. Method according to at least one of the preceding claims,
**characterized in that**
a reactive, heat-activatable adhesive comprising nitrile rubber and phenolic resin is used as curable adhesive.

## Revendications

1. Procédé d'enrobage d'un produit allongé, tel que notamment des conduites ou des faisceaux de câbles, selon lequel
une bande adhésive comprenant un support textile et un matériau adhésif durcissable appliqué sur l'ensemble de la surface sur au moins un côté du support, le matériau adhésif étant enfoncé à hauteur de plus de 25 % dans le support après l'application sur le support (déterminé par la méthode indiquée dans la description), est menée en hélice autour du produit allongé ou le produit allongé est enveloppé dans la direction axiale par la bande adhésive,
le produit allongé incluant la bande adhésive enveloppante est mis selon l'agencement souhaité, notamment selon le projet de faisceau de câble,
le produit allongé est maintenu selon cet agencement,
le matériau adhésif durcissable est amené à durcir par l'apport d'une énergie de rayonnement, telle que de la chaleur.

2. Procédé selon la revendication 1, **caractérisé en ce que** le matériau adhésif est enfoncé à hauteur de plus de 50 % dans le support après l'application sur le support.

3. Procédé selon la revendication 1, **caractérisé en ce que** le matériau adhésif imprègne entièrement le support après l'application sur le support.

4. Procédé selon l'une quelconque des revendications 1 à 3 précédentes, **caractérisé en ce que** le matériau adhésif durcissable est autoadhésif ou une couche de matériau autoadhésif est au moins partiellement appliquée sur le matériau adhésif durcissable.

5. Procédé selon au moins l'une quelconque des revendications précédentes, **caractérisé en ce que** le support présente un poids superficiel de 30 à 300 g/m², de préférence de 50 à 200 g/m², de manière davantage préférée de 60 à 150 g/m².

6. Procédé selon au moins l'une quelconque des revendications précédentes, **caractérisé en ce qu'**un tissu, un non-tissé ou un tricot est utilisé en tant que support.

7. Procédé selon au moins l'une quelconque des revendications précédentes, **caractérisé en ce que** le support est constitué par du polyester ou des fibres de verre.

8. Procédé selon au moins l'une quelconque des revendications précédentes, **caractérisé en ce qu'**un adhésif activable thermiquement réactif constitué par un caoutchouc de nitrile et une résine de phénol est utilisé en tant que matériau adhésif durcissable.
